# EUROPÄISCHE PATENTSCHRIFT

(11) **EP 0 460 348 B1**
(45) Veröffentlichungstag und Bekanntmachung des Hinweises auf die Patenterteilung: **11.09.1996**
(21) Anmeldenummer: 91100500.7
(22) Anmeldetag: 17.01.1991
(51) Int. Cl.: C08L 1/06, C08L 5/04, A22C 13/00, C08L 1/24

(54) **Flächen- oder schlauchförmige Folie auf Basis von Cellulosehydrat**
Flat or tubular foil of cellulose hydrate
Pellicule plate ou de forme tubulaire en hydrate de cellulose

(30) Priorität: 25.01.1990 DE 4002083
(43) Veröffentlichungstag der Anmeldung: 11.12.1991
(73) Patentinhaber: HOECHST AKTIENGESELLSCHAFT, 65926 Frankfurt am Main (DE)
(72) Erfinder: Hammer, Klaus-Dieter, Dr., W-6500 Mainz Mombach (DE); Winter, Hermann, W-6200 Wiesbaden (DE)

(56) Entgegenhaltungen:
- GB-A- 917 965
- GB-A- 2 203 928
- US-A- 4 063 558

## Beschreibung

Die Erfindung bezieht sich auf eine flächen- oder schlauchförmige Folie mit einem gegebenenfalls faserverstärkten Trägermaterial auf Basis von Cellulosehydrat, vorzugsweise auf eine Verpackungsfolie, insbesondere auf eine schlauchförmige künstliche Wursthülle, sowie auf ein Verfahren zu ihrer Herstellung.

Flächenförmige, d.h. bahnförmige oder blattförmige, sowie schlauchförmige Folien auf Basis von Cellulosehydrat sind seit langem bekannt und werden nach dem Viskoseverfahren hergestellt. Die allgemein als Viskoselösung bezeichnete alkalische Lösung von Cellulosexanthogenat wird durch eine ring- oder schlitzförmige Düse ausgepreßt und mit saurer Flüssigkeit als Cellulosehydrat-Gel koaguliert und zu Cellulosehydrat regeneriert. Durch die Zusammensetzung der Viskose und Einarbeiten von Zusatzstoffen lassen sich die Eigenschaften des schlauchförmigen oder flächenförmigen Körpers aus regenerierter Cellulose variieren. Die unverstärkten Cellulosehydrat-Folien werden auch als Zellglasfolien bezeichnet und sind unter dem Warenzeichen Cellophan bekannt. Bei der Herstellung faserverstärkter Körper wird ein schlauchförmiger oder bahnförmiger Faserstoff auf einer oder beiden Oberflächen mit Viskoselösung beschichtet und imprägniert und anschließend in entsprechender Weise mit Koagulations- und Regenerierflüssigkeit behandelt. Es ist auch bekannt, bahnfömige Cellulosefolien nach ihrer Herstellung zu einem Schlauch zu biegen und die überlappenden Ränder unter Bildung einer Längsnaht miteinander zu verbinden.

Folien aus diesem Material zeigen gute Wasseraufnahmefähigkeit und sind auch wasserdampfdurchlässig. Sie werden deshalb im großen Umfang als künstliche Wursthüllen für Rohwurst, wie z.B. für Dauerwurst oder Salami, und als Einwickelfolie verwendet.

Es ist bekannt, daß Folien aus Cellulosehydrat durch Wasser- und Weichmacherverlust während der Lagerung mehr und mehr verspröden und verhärten. Diese Erscheinung ist auf eine im Cellulosematerial vor sich gehende Kristallisation zurückzuführen, wobei es im Cellulosegefüge zur Ausbildung von Wasserstoffbrückenbindungen zwischen den einzelnen Cellulosemolekülen und damit zu einer Annäherung und räumlichen Fixierung der Moleküle kommt. Dieser Kristallisations- und Strukturveränderungsprozeß hat eine zeitlich fortschreitende Verminderung bestimmter physikalischer Eigenschaften, insbesondere der Dehnung, der Festigkeit und des Quellwertes der Folie zur Folge; außerdem bedingt er eine starke Schrumpfung der Folie, so daß bei schlauchförmigen Verpackungen auf Basis von Cellulose während der Lagerung ein starker Druckanstieg auf das umhüllte Produkt festzustellen ist.

Dieser in Folien aus Cellulosehydrat allmählich vor sich gehende Strukturveränderungsprozeß und die damit einhergehende nachteilige Versprödung der Folie läßt sich durch Zusatz von wasserlöslichen, sogenannten sekundären Weichmachern nur bedingt verhindern. Sekundäre Weichmacher, wie beispielsweise Glycerin, Propylenglykol oder Polyglykol, können zwar die Weichheit und Griffigkeit des Formkörpers verbessern. Da sekundäre Weichmachungsmittel nicht durch chemische Bindung an die Cellulosehydratmoleküle gebunden sind, sondern nur durch zwischenmolekulare Kräfte, neigen sie dazu, aus der Folie auszuwandern oder werden insbesondere beim Wässern der Folie, wie es bei Wursthüllen aus diesem Material vor dem Füllen mit Wurstbrät üblich ist, und beim Brühen und Kochen der Wurst aus dem Hüllenmaterial herausgelöst.

Die Folge ist ein besonders starkes Verspröden des weichmacherfreien getrockneten Cellulosematerials. Bei Wursthüllen mit einer Wasserdampf-Barriereschicht auf der inneren Oberfläche kann die Feuchtigkeit aus der Wurstmasse nicht in die Celluloseschicht gelangen. Dadurch werden solche Hüllen stoßempfindlich und neigen dazu, beim ersten Anschneiden der Wurst über die ganze Länge einzureißen. Es ist deshalb üblich, Würste mit einer solchen Wursthaut vor dem ersten Anschnitt mit kaltem Wasser kurz anzufeuchten. Diese Maßnahme kann aber nicht verhindern, daß bei der Lagerung der angeschnittenen Wurst sich die Wurstmasse durch den von der trockenen Hülle erzeugten hohen Innendruck aus der Schnittfläche herauswölbt oder sogar an der Schnittfläche aus der Wursthülle herausgedrückt wird.

Ein weiterer Nachteil von Wursthüllen auf Basis von Cellulose macht sich bei der Reifung von Rohwurst, z.B. Salami, bemerkbar. Die gleichmäßige Reifung dieser Wurstsorten verlangt eine sehr langsame Wasserabgabe aus der Wurstmasse während der ersten Tage der Reifung. Bei Verwendung von üblichen faserverstärkten Cellulosehüllen muß zur optimalen Reifung der Wurst eine sehr hohe relative Luftfeuchtigkeit der Umgebung vorherrschen, auch sind Schwankungen der Luftfeuchtigkeit zu vermeiden. Aus diesem Grund muß die Reifung von Rohwurst mit einer üblichen Wursthülle aus Cellulose bisher in Reifekammern erfolgen, in denen die relative Luftfeuchte in vergleichsweise engen Grenzen sorgfältig geregelt werden muß.

Zu niedriger oder schwankender Feuchtegehalt der Umgebungsluft während der Reifung der Wurst führt zu sogenannten Trockenrändern am Wurstumfang. Dieses unerwünschte Phänomen tritt insbesondere dann auf, wenn in den ersten Tagen der Reifung die Wurstmasse an der äußeren Oberfläche der Wurst zu schnell abtrocknet. Der getrocknete Außenumfang der Wurst, der sogenannte Trockenrand, verhindert den weiteren Austritt von Feuchtigkeit aus dem Kern der Wurst, so daß die Wurstmasse im Innern der Wurst nach der üblichen Reifezeit noch feucht ist und in der Reifung zurückbleibt. Außerdem haftet die Wursthülle nicht mehr ausreichend fest am Trockenrand, so daß sich unerwünschte Zwischenräume zwischen der Wurstmasse und der Hülle und Falten in der Hülle ausbilden.

Es ist demnach Aufgabe der Erfindung, Folien auf Basis von Cellulose so zu modifizieren, daß sich ihre Gebrauchseigenschaften, insbesondere ihre Festigkeit, Dehnfähigkeit, Quellbarkeit und Schrumpfverhalten auch nach längerer Lagerzeit nicht nachteilig verändern. Die Folie soll auch nach ihrer Verarbeitung und beim Gebrauch, d.h. wenn der sekundäre Weichmacher durch Wassereinwirkung entfernt ist, noch weich und geschmeidig bleiben, also nicht verspröden. Bei ihrer Verwendung als Wursthülle sollen daraus hergestellte Würste selbst bei relativ geringer relativer Luftfeuchtigkeit problemlos, d.h. ohne Platzer, transportiert und ohne Einzureißen angeschnitten werden können. Weiterhin sollen die obengenannten bei der Reifung von Rohwurst mit einer Cellulosehülle auftretenden Probleme beseitigt werden.

Diese Aufgabe wird überraschenderweise bei der flächen- oder schlauchförmigen Folie, insbesondere bei den künstlichen Wursthüllen auf Basis von Cellulose dadurch gelöst, daß das Trägermaterial aus einer Mischung von Cellulosehydrat und Alginsäure und/oder Alginat besteht. Die von Anspruch 1 abhängigen Ansprüche geben bevorzugte Ausführungsformen der Folie an. Die Aufgabe wird ferner gelöst durch das in Anspruch 4 angegebene Verfahren.

Die Folie ist blatt- oder bahnförmig, worunter Flächenkörper zu verstehen sind, deren Dicke im Vergleich zu den beiden anderen Dimensionen relativ gering ist. Diese Flächenkörper sind inbesondere relativ dünne Verpackungsfolien. In weiterer bevorzugter Ausführungsform ist die Folie schlauchförmig und dient ebenfalls als Verpackungshülle, z.B. für Lebensmittel. Die schlauchförmige Folie besteht aus einer gebogenen Bahn, deren längsaxiale Ränder mit einer längsaxialen Naht miteinander verbunden sind, vorzugsweise wird die schlauchförmige Folie nahtlos gefertigt. Insbesondere enthält die schlauchförmige Folie auf Basis von Cellulose eine Faserverstärkung. Die schlauchförmige Folie wird mit oder ohne Faserverstärkung als künstliche Wursthülle bei der Wurstherstellung eingesetzt.

Alginsäuren sind bekanntlich Carboxylgruppen enthaltende pflanzliche Polysaccharide, Alginate sind die Salze der Alginsäuren, vorzugsweise die Alkali-, Ammonium- und Erdalkalisalze. Die Alginsäure wird gewöhnlich als Natriumalginatlösung durch Extraktion von Braunalgen mit Hilfe von Sodalösung gewonnen. Alginate bzw. Alginsäuren bestehen aus 1.4-beta-glykosidisch verknüpften D-Mannuronsäureeinheiten mit Einschüben von 1.4-alpha-glykosidisch verknüpften L-Guluronsäureeinheiten. Sie sind ähnlich wie Cellulose aus langen unverzweigten Kettenmolekülen aufgebaut. Durch die große Anzahl von Carboxylgruppen sind die Alginate bzw. Alginsäuren außerordentlich hydrophil und in der Lage, das 200- bis 300- fache ihres Gewichts an Wasser zu binden.

Die erfindungsgemäß im Celluloseträgermaterial eingebettete Alginsäure ist in Wasser praktisch unlöslich. Es ist zwar auch möglich, zusätzlich oder anstelle der Alginsäure ein Salz der Alginsäure, vorzugsweise die Alkali-, Ammonium- und Erdalkalisalze, insbesondere das Natrium- und das Calcium-Alginat, in die Celluloseschicht einzubinden. Alginate haben im Vergleich zu Alginsäure allerdings den Effekt, daß die Hydrophilie und das Wasserbindevermögen der Folie nicht so stark zunimmt. Es hat sich gezeigt, daß die Alginsäure und die Alginate, auch die wasserlöslichen, in der Folie fest verankert sind.

Der Anteil der Alginsäure bzw. des Alginats in der Folie kann in breiten Bereichen liegen und beträgt 1 bis 100, vorzugsweise 3 bis 90, insbesondere 5 bis 80 Gew.-%, bezogen auf die Cellulose. Der Wassergehalt der Folie beträgt gewöhnlich 6 bis 30 Gew.-%, bezogen auf das Gesamtgewicht der Folie.

Durch den erfindungsgemäßen Zusatz von Alginsäure und/oder Alginat wird vermutlich eine Auflockerung der Cellulosestruktur bewirkt, was sich in einer deutlichen Erhöhung des Wasserbindevermögens und des Quellwertes zeigt. In der Tabelle 1 ist die Abhängigkeit des Quellwertes einer schlauchförmigen faserverstärkten Cellulosehülle (Kaliber 60 mm) vom Alginsäuregehalt dargestellt.

**Tabelle 1**

| Alginsäuregehalt (Gew.-%) | Quellwert | |
|---|---|---|
| | (20 Gew.-% Glycerin) | (ohne Glycerinzusatz) |
| 0 | 120 - 130 | 70 - 90 |
| 5 | 130 - 140 | 100 - 110 |
| 10 | 140 - 160 | 110 - 120 |
| 15 | 160 - 190 | 125 - 135 |
| 18 | 190 - 200 | |

Wie aus der Tabelle zu ersehen ist, wird mit einem Alginsäuregehalt von 10 bis 15 % ohne Zusatz von Glycerin etwa der Quellwert des üblichen Cellulosematerials mit einem Glyceringehalt von 20 Gew.-% erreicht. Die aufgelockerte Struktur der erfindungsgemäßen Folie beeinträchtigt die mechanischen Eigenschaften der Folie nicht. Darüber hinaus macht sich der Alginsäuregehalt in einer Zunahme der Hydrophilie der Folie bemerkbar.

Die aufgelockerte Struktur der Folie dürfte der Grund dafür sein, daß die Folie bereits ab einem Alginsäure- bzw. Alginatgehalt von nur 5 Gew.-% überraschenderweise ohne den üblichen Weichmacher wie etwa Glycerin und mit deutlich niedrigerem Wassergehalt verarbeitet werden kann. Sie ist bereits ohne Weichmacherzusatz ausreichend geschmeidig, um maschinell gerafft und mit Wurstmasse unter Druck gefüllt werden zu können. Die Celluloseschicht der Folie enthält somit gewöhnlich außer Alginsäure und/oder Alginat und Wasser keine weiteren Zusatzstoffe. Dadurch besteht keine Gefahr der Weichmacheremission beim Herstellungsprozeß und auch die Beseitigung der nach dem Wässern der Hüllen anfallenden glycerinhaltigen Abwässer, wozu ein hoher biologischer Sauerstoffbedarf erforderlich ist, entfällt. Es ist allerdings nicht ausgeschlossen, daß die Folie gegebenenfalls einen für Cellulosematerial üblichen Weichmacher enthält, falls eine besonders geschmeidige Folie angestrebt wird.

Die Folie zeigt aufgrund des Alginsäure- bzw. Alginatzusatzes eine verzögerte Wasseraufnahme und Wasserabgabe. Diese Eigenschaft ist besonders von Vorteil, wenn die Folie als faserverstärkte Wursthülle, als sogenannter Faserdarm für Rohwurst, z.B. für Dauerwurst oder Salamitypen, eingesetzt wird. Die Reifung von Würsten mit der Hülle gemäß der Erfindung wird mit zunehmendem Alginsäure-bzw. Alginatgehalt weniger empfindlich gegenüber zu niedriger oder schwankender Luftfeuchtigkeit. Das bei üblichen Cellulosehüllen auftretende Problem der Ausbildung dung von Trockenrändern wegen ungleichmäßiger Reifung von Dauerwurst wird durch die erfindungsgemäße Hülle verhindert.

Die verzögerte Abgabe von Wasser bei 55 % relativer Luftfeuchte/23 °C eines 15 Gew.-% Alginsäure enthaltenden Faserdarms im Vergleich zu einem Faserdarm ohne diesen Zusatz ergibt sich aus den Werten der Tabelle 2.

**Tabelle 2**

| Zeit (h) | Feuchteabgabe | |
|---|---|---|
| | Erfindung | Stand der Technik |
| 0,5 | 14,3 | 18,0 |
| 1,0 | 22,7 | 25,9 |
| 2,0 | 38,0 | 40,0 |
| 3,0 | 45,0 | 45,3 |

Die Hülle der Erfindung zeigt somit typische Eigenschaften von Kollagenhüllen. Bei der Reifung von Rohwurst ist die Hülle während der kritischen Reifephase der ersten Tage aufgrund ihres höheren Feuchtigkeitsgehaltes in der Lage, schwankende Reifebedingungen weitgehend zu kompensieren. Wie Kollagenhüllen stellt die Alginsäure bzw. Alginat enthaltende Cellulosehülle während der Lagerung der Wurst seltener vom Wurstbrät ab, wenn dieses durch Trocknung schrumpft. Dadurch wird verhindert, daß sich zwischen der Hülle und der getrockneten Wurstmasse Zwischenräume ausbilden, die zu unerwünschtem Geleeabsatz unter der Wursthülle führen und der Hülle ein faltiges Aussehen verleihen.

Die Hülle ist damit im Vergleich zu einer üblichen Cellulosehülle wesentlich besser zum Reifen naturgereifter Dauerwurst geeignet.

Bei Verwendung der Folie als Wursthülle zeigt sie das übliche Kaliber von 18 bis 200, insbesondere 40 bis 135 mm. Die faserverstärkte Folie besitzt in dem bevorzugten Kaliberbereich von 40 bis 135 mm gewöhnlich ein Flächengewicht von 50 bis 100 g/m², die nichtverstärkte Folie ein Flächengewicht von 40 bis 130 g/m². Bei zusätzlichen sekundären Weichmachern wie Glycerin erhöht sich das Flächengewicht in Abhängigkeit von der Weichmachermenge.

Die Herstellung der Folie erfolgt nach dem Viskoseverfahren. Die Alginsäure bzw. das Alginat wird in wäßriger Lösung in wasserlöslicher Form, z.B. als Ammonium- oder Alkalisalz der Alginsäure, mit der alkalischen Viskoselösung im gewünschten Gewichtsverhältnis homogen gemischt, und zwar entweder im Spinnkessel oder kurz vor der Spinndüse. Zweckmäßigerweise wird ein Alginat eingesetzt, welches in wäßriger Lösung eine relativ niedrige Viskosität zeigt. Hierzu gehören wäßrige Natriumalginatlösungen, die bei einer Konzentration von 1 % (20 °C) eine Viskosität von 10 bis 60, insbesondere 15 bis 40 mPa^{·}s zeigen. Die Mischung aus Viskose und Alginat wird bahn- oder schlauchförmig durch eine Spinndüse extrudiert. Bei der Herstellung von Folien mit einer Faserverstärkung wird in an sich bekannter Weise eine Faserbahn, die gegebenenfalls zu einem Schlauch gebogen wird, mit der Mischung aus üblicher alkalischer Viskoselösung und wasserlöslichem Salz der Alginsäure getränkt und beschichtet. Anschließend wird durch Einwirkung einer zur Fällung der Viskose üblichen sauren Spinnflüssigkeit, die gewöhnlich Schwefelsäure enthält, auch die im sauren Bereich schwer lösliche Alginsäure ausgefällt. Die Fällflüssigkeit befindet sich beispielsweise in einem Bad, welches die extrudierte Viskoselösung bzw. die viskosierte, gegebenenfalls schlauchförmig gebogene, Faserbahn durchläuft, oder sie wird als Film durch eine Düse auf die extrudierte Viskose bzw. auf die viskosierte Faserbahn aufgebracht. Nach dem Durchlaufen der bei der Herstellung von Folien aus Cellulosehydrat üblichen Regenerier-und Waschbäder wird die Folie getrocknet. Zum Trocknen auf den üblichen Feuchtigkeitsgehalt (8 bis 10 %) von Cellulosehüllen ist allerdings wegen des hohen Wasserbindevermögens der Alginsäure bzw. des Alginats ein vergleichsweise hohes Energieangebot erforderlich.

Es ist zwar möglich, die Hülle vor oder nach dem Trocknen mit einer wäßrigen Lösung von Alkali-, Ammonium- oder Erdalkali-Ionen, z.B. Ca-Ionen in Form von CaCl₂, zu behandeln, um die Alginsäure teilweise oder vollständig in das Alginat überzuführen. Eine Verbesserung der Hülleneigenschaften läßt sich durch den Zusatz von Alginaten im Vergleich zur Alginsäure aber nicht erzielen.

Wird die Hülle bei ihrer Herstellung durch eine alkalische wäßrige Lösung mit Alkalisulfid gezogen, wie es zur Entschwefelung der regenerierten Cellulose vor dem Trocknen üblich ist, so werden die entstandenen Alkalisalze der Alginsäure von der wäßrigen Lösung nicht aus der Cellulose herausgelöst. Das zeigt, daß selbst die sonst wasserlöslichen Alkalisalze der Alginsäuren aufgrund der Molekülgröße und der räumlichen Anordnung der Alginatmoleküle nicht aus der Celluloseschicht herausgelöst werden. den. Da gewöhnlich auf die Alkalisulfidbehandlung ein saures Waschbad folgt, entsteht aus den Alkalisalzen der Alginsäure wieder die Alginsäure, so daß im Endprodukt im allgemeinen die Alginsäure und nicht ihr Alkalisalz vorliegt.

Die Folie wird vor dem Trocknen gegebenenfalls durch ein Bad mit einem sekundären Weichmacher, z.B. eine wäßrige Glycerinlösung, geführt. Der Zusatz eines Weichmachers ist allerdings bei Verwendung der Folie als künstliche Wursthülle nicht erforderlich, da die Folie bereits die zur Verarbeitung erforderliche Geschmeidigkeit aufweist. Eine glycerinfreie schlauchförmige faserverstärkte Cellulosehülle mit einem Alginsäure- bzw. Alginatgehalt von 5 Gew.-% läßt sich überraschenderweise selbst bei einem Wassergehalt von kleiner als 10 Gew.-% maschinell raffen und auf Füllmaschinen verarbeiten.

Bei Verwendung der Folie als künstliche Wursthülle zeigt sie gegebenenfalls die üblichen Beschichtungen auf der Innen- und/oder Außenseite, z.B. eine Barriereschicht gegenüber Luftsauerstoff und Wasserdampf auf der Innenoder Außenseite, eine Innenschicht zur Verbesserung des Schälverhaltens und/oder zur Verbesserung der Haftung zwischen Wurstmasse und Hülleninnenwand oder eine fungicide Beschichtung auf der Außenseite, und enthält gegebenenfalls übliche Farbpigmente, z.B. Ruß oder TiO₂ in der erforderlichen Menge. Als schlauchförmige Verpackungshülle wird sie beispielsweise in geraffter Form, als einseitig abgebundener Abschnitt oder in flachgelegter Form als Rolle in den Handel gebracht.

Die Erfindung wird durch die nachfolgenden Beispiele näher erläutert. Soweit nicht anders angegeben, werden alle Prozentangaben in Gewichtsprozent ausgedrückt.

### Beispiel 1

Hanffaserpapier (Flächengewicht 17 g/m²) wird zu einem Schlauch (Kaliber 58 mm) geformt. Die Schlauchaußenseite wird mit einem Gemisch aus 10 Gew.-Teilen alkalischer Viskoselösung und 1 Gew.-Teil einer 4%igen wäßrigen Natriumalginatlösung mit einer Viskosität von etwa 20 mPa·s (gemessen bei einer 1%igen wäßrigen Lösung, 20 °C, z.B. ®Protacell 20 der Firma Protan A/S, Drammen, Norwegen) beschichtet und imprägniert. Der viskosierte Schlauch wird durch die üblichen Fäll-, Regenerier- und Waschbäder geführt. Das für Celluloseschläuche übliche Weichmacherbad entfällt. Der glycerinfreie Schlauch wird mit Stützluft aufgeblasen und auf einen Feuchtegehalt von 14 bis 16 % getrocknet. Das fertige Produkt enthält 5 % Alginsäure, bezogen auf die Cellulose.

Trotz des fehlenden Weichmachers und des relativ geringen Alginsäuregehaltes ist der Schlauch sehr geschmeidig und läßt sich noch bei einem Wassergehalt unter 10 % maschinell raffen und abbinden. Auf einer automatischen Füllmaschine wird mit Wurstbrät vom Salamityp das übliche Füllkaliber der entsprechenden glycerinhaltigen aber alginatfreien faserverstärkten Cellulosehülle von 61 bis 62 mm erreicht. Beim Füllen und Clippen entstehen keine Schwierigkeiten. Die Reifung der Wurst erfolgt völlig problemlos. Die Hülle enthält in den ersten Reifetagen der Wurst etwa 5 % mehr Wasser als eine entsprechende alginatfreie Hülle. Dadurch ist die Hülle gemäß der Erfindung in der Lage, schwankende Feuchtigkeitswerte in der Umgebung weitgehend zu kompensieren. Die Ausbildung von Trockenrändern wird verhindert.

### Beispiel 2

Hanffaserpapier (Flächengewicht 21 g/m²) wird zu einem Schlauch (Kaliber 45 mm) geformt. Die Schlauchaußenseite wird mit 10 Gew.-Teilen alkalischer Viskoselösung und 2,6 Gew.-Teilen der 4%igen Alginatlösung des Beispiels 1 beschichtet und imprägniert. Der viskosierte Schlauch wird mit saurer Fällflüssigkeit behandelt und durch die üblichen Regenerierbäder geführt. Vor dem Einlauf in den Trockner wird er auf seiner Innenseite mit einer Emulsion aus einem wasserlöslichen kationischen Harz und einem Öl, wie in der EP-A-0 088 308 beschrieben, beschichtet. Der mit Stützluft aufgeblasene Schlauch wird auf einen Feuchtigkeitsgehalt von 12 bis 14 % getrocknet. Durch die Hitzeeinwirkung wird das kationische Harz ausgehärtet und geht in seine wasserunlösliche Form über. Vorzugsweise ist das kationische Harz das Reaktionsprodukt von Casein/Glyoxal. Eine Weichmacherbehandlung wird nicht vorgesehen. Das fertige Produkt enthält 15 % Alginsäure, bezogen auf die Cellulose.

Der weichmacherfreie Schlauch läßt sich bei einem Feuchtigkeitsgehalt von 16 % oder weniger problemlos maschinell raffen. Beim Einpressen von Dauerwurstbrät mit einer Füllvorrichtung wird ein Füllkaliber von 49 bis 50 mm erreicht, wie es bei alginatfreien, konventionellen glycerinhaltigen faserverstärkten Cellulosehüllen mit gleichem Kaliber erzielt wird.

Die Reifung der Wurst verläuft problemlos. Die Hülle läßt sich nach dem Reifeprozeß ohne Schwierigkeit von der Wurstmasse abschälen. Selbst bei ungünstigen Reifebedingungen (nur 80 % relative Feuchte in den ersten Tagen der Reifung) stellt die Hülle nicht von der geschrumpften Wurstmasse ab, d.h. es bilden sich kein Trockenrand und keine Zwischenräume zwischen Wursthülle und Wurstmasse.

### Beispiel 3

Hanffaserpapier (Flächengewicht 21 g/m²) wird zu einem Schlauch (Kaliber 60 mm) geformt. Die Außenseite und die Innenseite des Papierschlauchs werden im Gewichtsverhältnis 3:7 mit einem Gemisch aus 10 Gew.-Teilen alkalischer Viskoselösung und 2 Gew.-Teilen der 4%igen Alginatlösung des Beispiels 1 beschichtet und imprägniert. Der außen und innen viskosierte Schlauch wird außen und innen mit saurer Fällflüssigkeit behandelt und durch die üblichen Bäder zum Regenerieren der Cellulose geführt. Vor dem Trocknen wird auf die Innenseite eine Lösung eines üblichen Harzes zur Verbesserung der Haftung der Hülleninnenseite mit der Wurstmasse aufgebracht. Im Trockner wird der Schlauch bis auf einen Feuchtegehalt von 12 bis 14 % getrocknet. Das fertige Produkt hat einen Alginsäuregehalt von 11 Gew.-%, bezogen auf die Cellulose.

Das sehr geschmeidige Material läßt sich problemlos maschinell abbinden und maschinell raffen. Einseitig abgebundene Hüllenabschnitte und geraffte Schläuche werden mit Rohwurstbrät auf ein übliches Kaliber von 65 bis 66 mm gefüllt. Selbst bei ungünstigen Reifebedingungen (nur 80 % relative Feuchte in den ersten Reifetagen) bilden sich keine Trockenränder und die Hülle bleibt an der geschrumpften Wurstmasse haften.

### Beispiel 4

Hanffaserpapier (17 g/m²) wird zu einem Schlauch (Kaliber 45 mm) geformt. Die Außenseite und Innenseite des Papierschlauchs werden im Gewichtsverhältnis 4:6 mit einem Gemisch aus 10 Gew.-Teilen alkalischer Viskoselösung und 3,4 Gew.-Teilen der 4%igen Alginatlösung des Beispiels 1 beschichtet und imprägniert. Der beidseitig viskosierte Papierschlauch wird innen und außen mit Fällflüssigkeit behandelt und die gefällte Cellulose in üblicher Weise zu Cellulosehydrat regeneriert. Die Innenseite des Schlauchs wird mit der wäßrigen Lösung eines bekannten hitzehärtbaren kationischen Harzes versehen, welches als Haftvermittler für den späteren Auftrag einer Sauerstoff- und Wasserdampf-Barriereschicht dient. Danach wird der faserverstärkte Celluloseschlauch mit Stützluft aufgeblasen durch einen Trockner geführt, wo das Wasser bis auf einen Feuchtegehalt von 10 bis 12 % entfernt wird und das kationische Harz aushärtet. Das ausgehärtete Harz ist beispielsweise das Reaktionsprodukt, das durch Vernetzung von Polyaminpolyamid mit Epichlorhydrin entsteht. Nach dem Trocknen wird die Schlauchinnenseite mit der wäßrigen Dispersion eines VDC-Copolymers beschichtet, welches nach Entfernen des Wassers und Erhitzen die Barriereschicht ausbildet. Die fertige Hülle hat einen Alginsäuregehalt von 18,8 Gew.-%, bezogen auf die Cellulose.

Nach dem Füllen mit Kochwurstbrät, z.B. vom Leberwursttyp, oder mit Brühwurstbrät und der üblichen Heißwasserbehandlung sind die Hüllen noch ungewöhnlich geschmeidig. Beim Anschneiden der Wurst, selbst bei relativ niedriger Luftfeuchtigkeit, reißt die Wursthülle nicht ein.

## Patentansprüche

1. Flächen- oder schlauchförmige Folie mit einem gegebenenfalls faserverstärkten Trägermaterial auf Basis von nach dem Viskoseverfahren erhaltenen Cellulosehydrat, dadurch gekennzeichnet, daß das Trägermaterial aus einer Mischung von Cellulosehydrat und Alginsäure und/oder Alginat sowie gegebenenfalls einem Weichmacher besteht.

2. Folie nach Anspruch 1, dadurch gekennzeichnet, daß der Anteil der Alginsäure und des Alginats insgesamt 1 bis 100, vorzugsweise 3 bis 90, insbesondere 5 bis 80 Gew.-%, bezogen auf die Cellulose, beträgt.

3. Folie nach Anspruch 1 oder 2, dadurch gekennzeichnet, daß das Alginat ein Ammonium-, Alkali- oder Erdalkalisalz, bevorzugt das Natrium- oder Calciumsalz, der Alginsäure ist.

4. Verfahren zur Herstellung der Folie nach einem der Ansprüche 1 bis 3, bei dem man alkalische Viskoselösung auf eine bahn-oder schlauchförmige Faserverstärkung extrudiert und die Viskose durch eine saure Fällflüssigkeit koaguliert und zu Cellulosehydrat regeneriert, dadurch gekennzeichnet, daß man die Viskose vor der Extrusion mit einem wasserlöslichen Salz der Alginsäure, vorzugsweise einem Alkalisalz der Alginsäure, versetzt, die Viskose und das Salz der Alginsäure in homogener Mischung extrudiert und die Mischung durch die saure Fällflüssigkeit koaguliert.

5. Verfahren nach Anspruch 4, dadurch gekennzeichnet, daß man die gefällte Alginsäure nach dem Regenerieren der Cellulose durch Behandlung der Folie mit einer wäßrigen Lösung von Salzen mit Ammonium-, Alkali- oder Erdalkalikationen zumindest teilweise in das entsprechende Salz der Alginsäure umwandelt.

6. Verwendung der flächen- oder schlauchförmigen Folie gemäß einem oder mehreren der Ansprüche 1 bis 3 als Verpackungsfolie, bevorzugt als künstliche Wursthülle.

## Claims

1. A flat or tubular film with a support material, fiber-reinforced if desired, based on hydrated cellulose obtained by the viscose process, wherein the support material is composed of a mixture of hydrated cellulose and alginic acid and/or an alginate, and optionally of a plasticizer.

2. The film as claimed in claim 1, wherein the proportion of alginic acid and/or the alginate totals 1 to 100, preferably 3 to 90 and especially 5 to 80 % by weight, relative to the cellulose.

3. The film as claimed in claim 1 or 2, wherein the alginate is an ammonium salt, an alkali metal salt or an alkaline earth metal salt, preferably the sodium salt or calcium salt, of alginic acid.

4. A process for producing the film as claimed in any of claims 1 to 3, in which an alkaline viscose solution is extruded onto a web-shaped or tubular reinforcement and the viscose is coagulated by an acidic precipitating fluid and regenerated to give hydrated cellulose, which process comprises adding a water-soluble salt of alginic acid, preferably an alkali metal salt of alginic acid, to the viscose before the extrusion, extruding the viscose and the salt of alginic acid in a homogeneous mixture and coagulating the mixture by the acidic precipitating fluid.

5. The process as claimed in claim 4, wherein the precipitated alginic acid is converted, after the regeneration of the cellulose, by treatment of the film with an aqueous solution of salts with ammonium cations, alkali metal cations or alkaline earth metal cations at least partially into the corresponding salt of alginic acid.

6. Use of the flat or tubular film as claimed in one or several of claims 1 to 3 as a packaging film, preferably as an artificial sausage casing.

## Revendications

1. Pellicule plane ou en forme de boyau, comportant un matériau de support à base d'hydrate de cellulose obtenu selon le procédé viscose, éventuellement renforcé par des fibres, caractérisée en ce que le matériau de support est constitué d'un mélange d'hydrate de cellulose et d'acide alginique et/ou d'alginate, ainsi qu'éventuellement d'un plastifiant.

2. Pellicule selon la revendication 1, caractérisée en ce que la teneur en l'acide alginique et en l'alginate va au total de 1 à 100, de préférence de 3 à 90, en particulier de 5 à 80 % en poids, par rapport à la cellulose.

3. Pellicule selon la revendication 1 ou 2, caractérisée en ce que l'alginate est un sel d'ammonium, alcalin ou alcalino-terreux, de préférence le sel de sodium ou de calcium, de l'acide alginique.

4. Procédé pour la fabrication de la pellicule selon l'une des revendications 1 à 3, dans lequel on extrude une solution alcaline de viscose sur un renfort fibreux en forme de bande ou de boyau, et la viscose est coagulée au moyen d'un liquide acide de précipitation et régénérée en hydrate de cellulose, caractérisé en ce que l'on ajoute à la viscose, avant l'extrusion, un sel hydrosoluble de l'acide alginique, de préférence un sel alcalin de l'acide alginique, on extrude en mélange homogène la viscose et le sel de l'acide alginique, et le mélange est coagulé par le liquide acide de précipitation.

5. Procédé selon la revendication 4, caractérisé en ce que l'on convertit au moins en partie l'acide alginique précipité en le sel correspondant de l'acide alginique, après la régération de la cellulose, par traitement de la pellicule par une solution aqueuse de sels à cations ammonium, alcalins ou alcalino-terreux.

6. Utilisation de la pellicule plane ou en forme de boyau selon une ou plusieurs des revendications 1 à 3, en tant que pellicule de conditionnement, de préférence en tant qu'enveloppe synthétique pour saucisse.
